# EUROPÄISCHE PATENTANMELDUNG

(11) **EP 0 923 851 A1**
(43) Veröffentlichungstag der Anmeldung: **23.06.1999**
(21) Anmeldenummer: 98122098.1
(22) Anmeldetag: 21.11.1998
(51) Int. Cl.: A01B 15/02

(54) **Lockerungsschar für ein Bodenbearbeitungsgerät**

(30) Priorität: 19.08.1998 DE 29814840 U; 19.12.1997 DE 29722411 U
(71) Anmelder: RDZ DUTZI GmbH, 76698 Ubstadt-Weiher (DE)
(72) Erfinder: Dutzi, Friedhelm, 76698 Ubstadt-Weiher (DE)
(74) Vertreter: Petersen, Frank, Dipl.-Ing.

(57) **Zusammenfassung**

Die Erfindung betrifft ein Schar (2) für einen Bodenbearbeitungsgerät für die nichtwendende Bodenbearbeitung. Dieser Schar (2) ist an seiner vorderen Arbeitskante hartmetallbestückt und hat einen im wesentlichen keilförmigen Körper, der im Einsatz an einer Keilfläche (9,21) von Bodenmaterial überstrichen wird. Um die derartige abrasiv beanspruchte Keilflächen (9,21) zu schützen wird vorgeschlagen, die Keilflächen (9,21) zumindest in Abschnitten mit keramischen Plättchen (12,14,23-26) zu versehen, die die Keilflächen (9,21) überwiegend abdecken, wobei diese keramischen Plättchen (12,14,23-26) einen erheblich besseren Abrasionswiderstand haben als das Grundmaterial des Körpers oder aber Hartmetall.

## Beschreibung

Die Erfindung betrifft den Schar für ein Bodenbearbeitungsgerät mit einer hartmetallbestückten vorderen Arbeitskante, die in einen im wesentlichen keilförmigen Körper übergeht, der im Einsatz an einer Keilfläche von Bodenmaterial überstrichen wird.

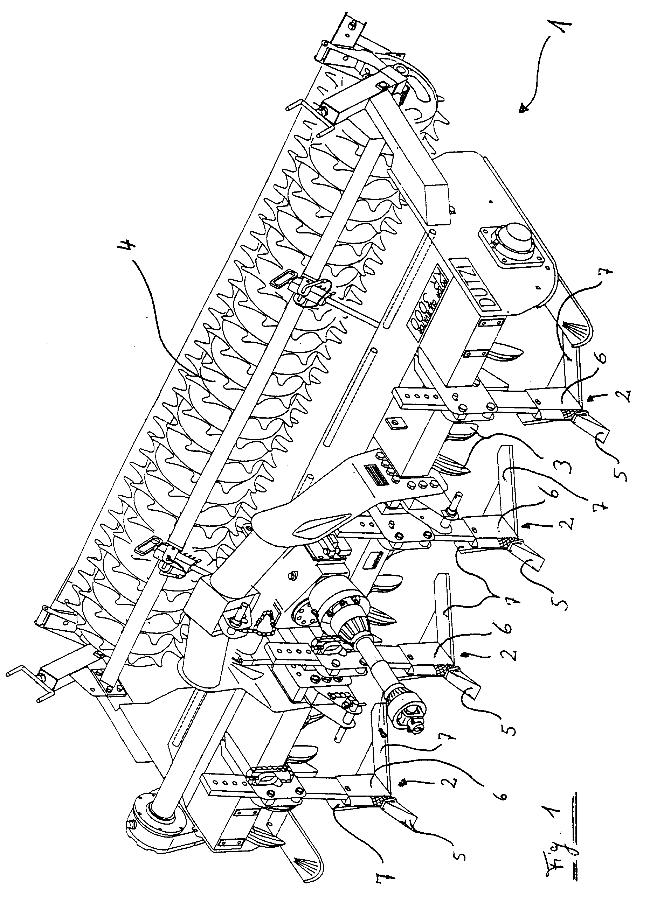

Ein entsprechendes Bodenbearbeitungsgerät 1 ist in der beigefügten Figur 1 dargestellt. Ein solches Bodenbearbeitungsgerät ist hinter einem Ackerschlepper angekuppelt und beruht auf dem Prinzip der nichtwendenden Bodenbearbeitung. Am vorderen Ende dieses Bodenbearbeitungsgerätes montierte Lockerungsschare 2 brechen den Boden über die Arbeitsbreite des Arbeitsgerätes auf, ohne ihn zu wenden. Hinter diesen Scharen 2 sitzt dann ein Zinkenrotor 3, der in Horizontalrichtung rotiert, mit dem Ernterückstände und Gründüngung in den oberen Bodenhorizont eingearbeitet werden und der dabei für den für eine Bandsaat notwendigen Erdstrom sorgt. Die Vorrichtung für die Bandsaat ist hier nicht dargestellt. Eine nachgeschaltete Packerwalze 4 führt dann das Bodenbearbeitungsgerät in einer eingestellten Tiefe und sorgt gleichzeitig für die nötige Rückverfestigung des Bodens.

Bei den bekannten Bodenbearbeitungsgeräten sind an den vorhandenen Lockerungsscharen 2 an der Vorderseite Meißel 5 angebracht, um den Boden vorzubrechen und um bei Einsatzbeginn des Gerätes für einen sicheren Einzug der Lockerungsschare 2 in den Boden zu sorgen.

Die Meißel 5 sind dabei in ihrem hinteren Bereich an einem Mittelteil 6 des Lockerungsschares 2 befestigt, während sie an ihrem vorderen Bereich eine Arbeitskante aufweisen, mit der sie in den Boden eintreten.

Das Mittelteil 6 bricht den Boden auch in Vertikalrichtung auf.

Seitlich am Mittelteil 6 sitzen Scharflügel 7, die als Arbeitskante eine vorneliegende Schneide 8 aufweisen und eine sich an die Schneide anschließende, im Einsatz von Bodenmaterial überstrichene Keilfläche 9.

Es ist bekannt, daß die Arbeitskanten aufgrund der abrasiven Belastung durch den sie überstreichenden Boden stark verschleißen.

Um dieses Problem zu umgehen, wurde in der DE-A-26 55 792 für einen Pflug mit vergleichbaren Schneiden vorgeschlagen, diese aus verschleißfestem keramischem Material herzustellen. Dies hat aber den Nachteil, daß die Keramik sehr spröde ist, so daß die Schneiden sofort brechen, wenn sie im Boden auf einen Stein treffen.

Um dieses Problem zu umgehen, wird die Arbeitskante mit einer Hartmetallschicht gepanzert, wodurch die vorhandenen Schneiden verschließfester sind und auch unempfindlicher gegen Steinschläge.

Dies beruht darauf, daß das Grundmaterial der Schare relativ elastisch ist und somit Stöße auffangen kann, während die Hartmetallschicht eine gute Abrasionswiderstandsfähigkeit aufweist. Somit ist eine gute Kombination der Eigenschaften von Hartmetallschicht und dem üblicherweise geschmiedeten, etwas elastischeren Grundmaterial des Schares gegeben.

Es hat sich jetzt herausgestellt, daß bei derart geschützten Scharen nicht mehr die mit Hartmetall besetzte Arbeitskante am stärksten verschleißt sondern Keilflächen, die sich an die mit Hartmetall gepanzerte schleißt sondern Keilflächen, die sich an die mit Hartmetall gepanzerte Arbeitskante anschließen, werden stark abrasiv beansprucht durch das Erdmaterial, das über sie hinwegläuft.

Außerdem wird eine derartige Hartmetallschicht üblicherweise aufgelötet, was insbesondere bei den normalerweise als Schmiedeteil ausgebildeten Meißeln und Scharflügeln zu Verzug führen kann. Ein solcher Verzug wird durch Eigenspannungen im Schmiedeteil ausgelöst und ist insofern kritisch, als er die Paßgenauigkeit der aufgesetzten Hartmetallschicht einschränkt. Er sollte daher auf ein Minimum beschränkt werden.

Auch bei den entsprechend an der Arbeitskante mit Hartmetall besetzten Meißeln verschleißt nicht mehr die vordere Arbeitskante am stärksten, sondern die Keilflächen, die sich an die mit Hartmetall gepanzerte Arbeitskante anschließen, werden stark abrasiv beansprucht durch Erdmaterial, das über sie hinwegläuft.

Aufgabe der vorliegenden Erfindung ist daher, diesen Verschleiß zu minimieren, wobei gleichzeitig noch erreicht werden soll, die Gebrauchseigenschaften der Schare zu verbessern.

Diese Aufgabe wird erfindungsgemäß gelöst, indem die Keilflächen zumindest in Abschnitten mit keramischen Plättchen versehen werden, die diese überwiegend abdecken.

Die Erfindung hat den Vorteil, daß Keramik erheblich widerstandsfähiger ist gegen Abrasion als das Grundmaterial des Schares und somit dem Verschleiß besser widersteht.

Damit kann der Körper des Schares, d. h. insbesondere des Meißels und der Scharflügel selbst auch weniger hart ausgeführt werden, wodurch er weniger spröde und damit elastischer wird. Er ist damit weniger anfällig gegen stoßartige Belastungen, wie sie beispielsweise auftreten, wenn der Schar im Erdreich auf einen Stein trifft.

Als wesentlicher Vorteil der keramischen Plättchen ist auch anzusehen, daß sie einen sehr niedrigen Reibungskoeffizienten haben und somit ein erfindungsgemäß ausgestatteter Schar im Boden einen geringeren Widerstand findet. Dadurch läßt sich der Zugkraftbedarf des Bodenbearbeitungsgerätes reduzieren.

Ein weiterer Vorteil der keramischen Beschichtung gegenüber der an der Arbeitskante vorgesehenen Hartmetallbeschichtung liegt in ihrem günstigeren Preis.

Um für die keramischen Plättchen einen guten Halt an dem Schar, d. h. also an dem Meißelkörper bzw. den Scharflügeln zu erhalten, wird vorgeschlagen, die Plättchen dort in korrespondierende Vertiefungen einzusetzen, so daß die Plättchen zum einen nur teilweise über die Keilfläche überstehen, zum anderen sich aber auch gut an dieser gegen auf sie einwirkende Scherkräfte abstützen können.

Vorteilhafterweise werden die Plättchen dabei eingeklebt, wobei sich Klebstoffschichtdicken von etwa 0,5 mm Dicke bewährt haben.

Das Einkleben hat dabei den wesentlichen Vorteil, daß auf den Körper von Meißel und Scharflügeln keine zusätzlichen Wärmebelastungen einwirken, die an diesem wie oben beschrieben zu Eigenspannungen führen würden. Diese Anbringungsform hat also den Vorteil, daß sie unabhängig von der Anbringungsart für den Hartmetallschutz der vorderen Arbeitskante erfolgen kann, der üblicherweise im Hartlötverfahren mit entsprechender Warmebelastung angebracht wird. Insofern ist insbesondere die Kombination der verschiedenen Verschleißschutzmittel aus Hartmetall einerseits und Keramik andererseits vorteilhaft, da jedes Material auch gemäß seinen Eigenschaften optimal eingesetzt ist: das relativ schlagfestere Hartmetall an der Arbeitskante und die relativ abrasionsresistentere Keramik auf der vom Bodenmaterial überstrichenen Keilfläche.

Um bei den Keramikplättchen eine höhere Stabilität zu erreichen wird vorgeschlagen, die Kanten an deren Oberseiten anzufasen, wobei sich insbesondere bei einem Neigungswinkel der Fase von ca. 30° eine besonders hohe Stabilität der Keramikplättchen gegen Bruch und insbesondere Kantenbruch erreichen läßt.

Insbesondere im Seitenbereich von rechteckigen oder quadratischen Keramikplättchen hat sich aber auch bewährt, die Fase abgerundet auszuführen.

Um mit einer möglichst geringen Anzahl von verschiedenen Keramikplättchen auszukommen, wird für die Keilfläche des Meißels, die im wesentlichen trapezförmig ist, vorgeschlagen, daß bei einem Plättchenbelag, der sich jeweils streifenweise über die gesamte Breite der Keilfläche ergibt, diese Plättchenstreifen jeweils aus wenigstens einem Standardteil gebildet werden, die jeweils mit einem Ergänzungsteil so zusammengestellt sind, daß die Streifen an die lokale Breite der trapezförmigen Keilfläche angepaßt sind.

Um dabei zu verhindern, daß an einer in Meißellängsrichtung verlaufenden Fuge zwischen zwei derart benachbarten Plättchenteilen Auswaschungen entstehen, wird vorgeschlagen, die Fuge zwischen zwei benachbarten Teilen zur Verhinderung von Längsauswaschungen schräg zur Breitenrichtung anzuordnen.

Generell wird für die Keilfläche von Scharflügeln und Meißel alternativ vorgeschlagen, die Plättchen rund auszuführen und sie in zueinander versetzten hintereinander angeordneten Reihen zu staffeln. Auf diese Weise ist eine noch größere Vereinheitlichung der einzusetzenden Plättchen möglich und durch den Versatz von hintereinander angeordneten Reihen kann eine hohe Belegungsdichte für die Keilfläche erreicht werden.

Es hat sich im übrigen herausgestellt, daß es insbesondere bei den Scharflügeln im wesentlichen ausreichend ist, die Keramikplättchen am der Schneide bzw. der Arbeitskante abgewandten Ende der Keilfläche anzuordnen, wobei davon ausgegangen wird, daß dies an den lokalen Strömungsverhältnissen liegt: Der Erdstrom, der über die Schneide läuft, legt sich erst im hinteren Abschnitt der Keilfläche wieder an die Oberfläche des Scharflügels an, während er sich im sich an die Schneide anschließenden Bereich der Keilflächen etwas von der Oberfläche löst, da die Schneide gegenüber der Keilfläche abgewinkelt ist.

Weitere Vorteile und Merkmale der Erfindung ergeben sich aus der nachfolgenden Beschreibung von Ausführungsbeispielen. Dabei zeigt
- Figur 1: eine Ansicht eines Bodenbearbeitungsgerätes;
- Figur 2: die Aufsicht auf einen Lockerungsschar mit Scharflügeln;
- Figur 3: eine Schnittansicht gemäß der Linie III-III in Figur 2;
- Figur 4: die Aufsicht auf eine andere Ausführungsform eines Lockerungsschares;
- Figur 5: eine Schnittansicht entlang der Linie V-V in Figur 4
- Figur 6: eine Aufsicht auf einen Meißel für einen Lockerungsschar gemäß Figur 2 mit sich über die gesamte Breite erstreckenden Plättchenstreifen;
- Figur 7: eine Seitenansicht eines Meißels gemäß Figur 6;
- Figur 8: einen Schnitt entlang der Linie VIII-VIII in Figur 7;
- Figur 9: eine alternative Ausführungsform für einen Schnitt entlang der Linie VIII-VIII in Figur 7;
- Figur 10: eine Aufsicht auf einen Meißel mit runden Plättchen in zueinander versetzten, hintereinander angeordneten Reihen;
und
- Figur 11: eine Seitenansicht eines Meißels gemäß Figur 10, teilweise geschnitten entlang der Linie XI-XI in Figur 10.

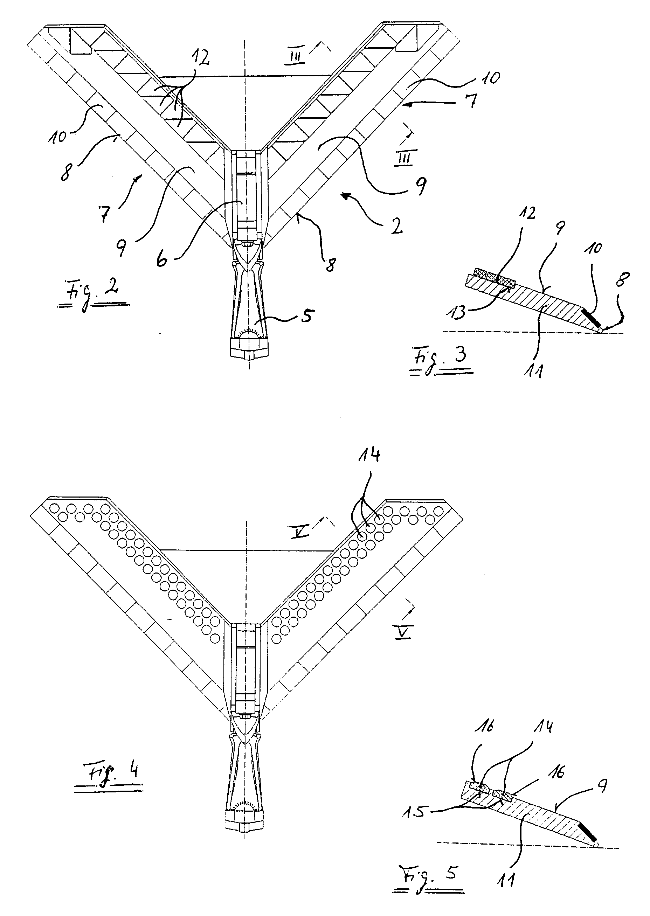

In der Figur 2 erkennt man einen Lockerungsschar 2 in der Aufsicht. Dieser Lockerungsschar 2 wird über ein Mittelteil 6 wie in der Figur 1 dargestellt an einem Bodenbearbeitungsgerät 1 befestigt. Dieses Bodenbearbeitungsgerät 1 wird hinter einem Ackerschlepper angekuppelt und beruht auf dem Prinzip der nichtwendenden Bodenbearbeitung.

Die am vorderen Ende des Bodenbearbeitungsgerätes 1 montierten Lockerungsschare 2 brechen den Boden über die Arbeitsbreite des Arbeitsgerätes auf, ohne ihn zu wenden. Dabei tritt ein am Mittelteil 6 befestigter Meißel 5 als erster in das Bodenreich ein, während am Mittelteil 6 schräg angebrachte, im wesentlichen horizontal liegende Scharflügel 7 den durch den Meißel 5 vorgebrochenen Boden horizontal zerschneiden.

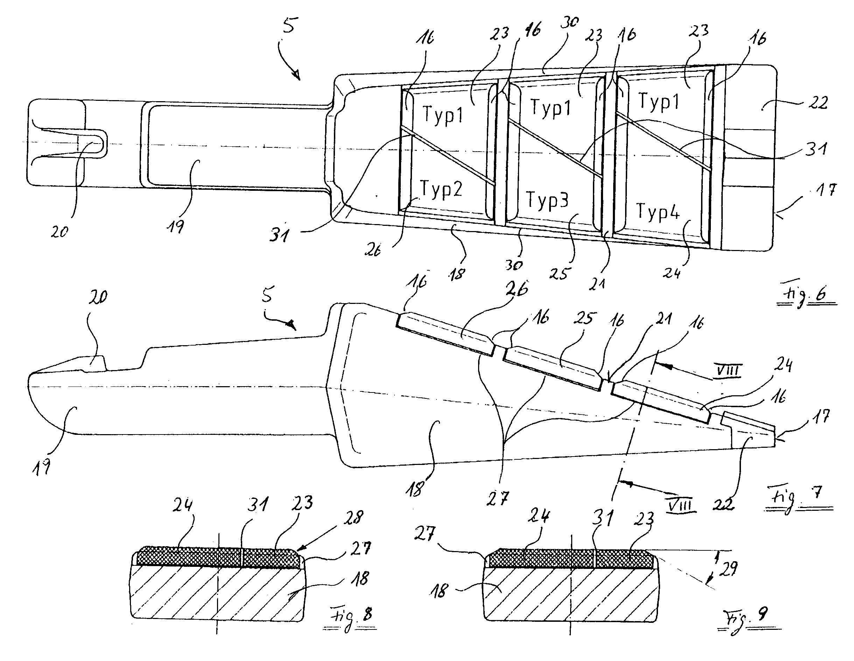

Die Scharflügel 7 weisen hierbei eine vordere Schneide 8 auf, wie sie auch in Figur 3 zu erkennen ist. Diese in den Boden eintretende Schneide 8 ist durch eine auf die Schneide aufgelötete Hartmetallschicht 10 gepanzert, wobei diese Hartmetallschicht 10 in eine entsprechende Vertiefung auf der Schneidenfläche der Schneide 8 eingelassen ist. Die Hartmetallschicht 10 setzt sich aus einzelnen Platten zusammen, die relativ dünn sind, so daß die Elastizität des die Hartmetallschicht 10 tragenden Grundkörpers 11 des Scharflügels 7 im wesentlichen bestimmend ist für die Stoßfestigkeit der Schneide 8, wenn diese im Boden auf einen Stein trifft.

Der Scharflügel 7 hebt das durch die Schneide 8 horizontal durchschnittene Bodenreich über eine sich an die Schneide 8 anschließende Keilfläche 9 an. Am der Schneide 8 mit ihrer Hartmetallschicht 10 abgewandten Ende der Keilfläche 9 sind in diesen Abschnitt der Keilfläche 9 Keramikplättchen 12 eingelassen.

Während die Hartmetallschicht 10 auf den Grundkörper 11 aufgelötet ist, sind die Keramikplättchen 12 eingeklebt, wobei die Klebstoffschicht eine Dicke von etwa 0,5 mm hat. Die keramischen Plättchen 12 haben einen erheblich höheren Widerstand gegen abrasiven Verschleiß als das Material des Grundkörpers 11, so daß damit ein guter Verschleißschutz für den Scharflügel 7 erreicht wird.

Außerdem haben die keramischen Plättchen einen niedrigeren Reibungskoeffizienten als das Material des Grundkörpers 11 oder die Hartmetallschicht 10, so daß auch unter diesem Aspekt die Fließfähigkeit des Erdstromes über den Flügel verbessert wird.

Durch das Einsetzen der keramischen Plättchen 12 in entsprechende Vertiefungen 13 sind die Keramikplättchen 14 einer geringeren Scherbeanspruchung ausgesetzt.

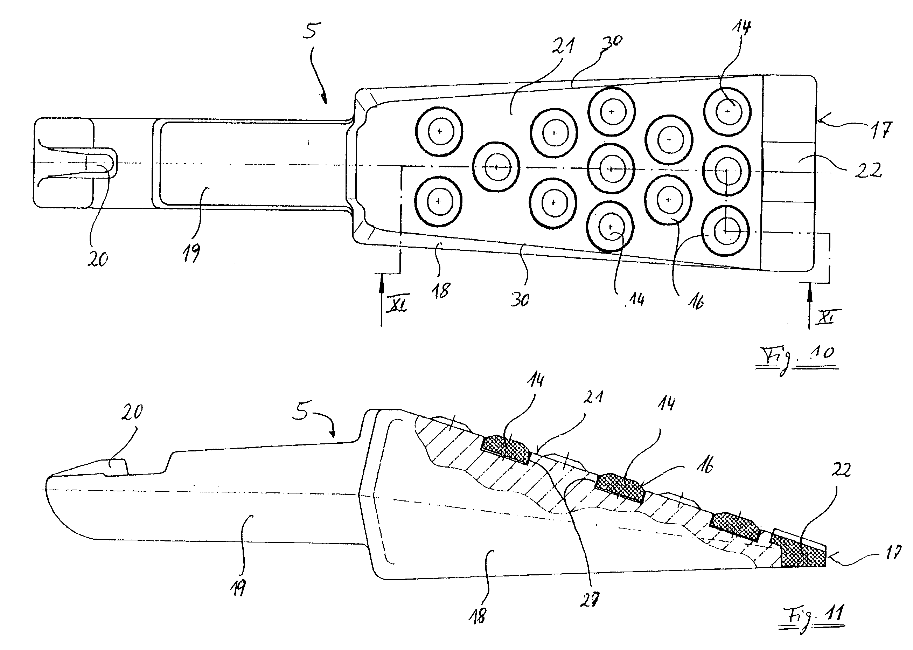

In den Figuren 4 und 5 ist eine alternative Ausführung von Keramikplättchen dargestellt. Hier sind die Keramikplättchen 14 in runder Form vorgesehen und nebeneinander in mehreren Reihen angeordnet.

Diese runden Plättchen sind ebenfalls in entsprechende Vertiefungen 15 eingesetzt, wodurch sie einer geringeren Scherbeanspruchung ausgesetzt sind und sich im übrigen gegen diese Scherbeanspruchung am Grundkörper 11 abstützen können.

An den über die Keilfläche 9 vorstehenden Bereichen sind die keramischen Plättchen mit gefasten Kanten 16 versehen, um sie vor Kantenbruch zu bewahren. Diese Fasen haben vorzugsweise einen Neigunswinkel von etwa 30° oder aber sind rundlich ausgebildet. Hierdurch wird eine entsprechende Gefahr von Kantenbruch erheblich verringert.

In Figur 6 ist außerdem noch die Aufsicht auf einen Meißel 5 für das Bodenbearbeitungsgerät 1 dargestellt. Der Meißel hat eine vordere Arbeitskante 17, die in einen im wesentlichen keilförmigen Meißelkörper 18 übergeht. Am Ende des Meißelkörpers 18 ist ein zumindest einseitig abgeflachter Haltebolzen 19 vorgesehen, mit dem der Meißel 5 über eine entsprechende Verrastung 20 in einer Halterung am Mittelteil 6 des Lockerungsschares 2 zu befestigen ist.

An diesem Lockerungsschar 2 angebracht wird der Meißel 5 mit seiner Arbeitskante 17 voran in zu bearbeitenden Boden eindringen, wobei dann vom Meißel 5 verdrängtes Bodenmaterial über eine Keilfläche 21 streicht und diese abrasiv beansprucht.

Die Arbeitskante 17 ist mit einem Hartmetallbesatz 22 gegen Verschleiß geschützt. Dieser Hartmetallbesatz 22 wird mittels Hartlöten am Meißelkörper 18 angebracht. Der Meißelkörper 18 besteht dabei üblicherweise aus geschmiedetem Material, so daß das mit Wärmeeinbringung verbundene Hartlöten zu Eigenspannungen im Meißelkörper 18 führen kann.

Um die Keilfläche 21 vor dem abrasiven Verschleiß zu schützen, wird sie mit keramischen Plättchen 23 bis 26 versehen, die die Keilfläche 5 zum großen Teil abdecken. Diese keramischen Plättchen haben einen erheblich höheren Widerstand gegen abrasiven Verschleiß als das Grundmaterial des Meißelkörpers 18, so daß damit ein guter Verschleißschutz für den Meißelkörper 18 erreicht wird.

Außerdem haben die keramischen Plattchen einen niedrigeren Reibungskoefizient als der Hartmetallbesatz 22 der vorderen Arbeitskante 17 oder das Grundmaterial des Meißelkörpers 18. Damit wird also auch weniger Energie benötigt, um den Meißel durch das bearbeitete Bodenmaterial zu führen.

Die keramischen Plättchen sind, wie insbesondere in der Figur 7 zu erkennen ist, in entsprechende Vertiefungen 27 eingesetzt, durch die sie sich gegenüber den Scherbeanspruchungen am Meißelkörper 18 abstützen. In den Vertiefungen 27 sind die keramischen Plättchen 23 bis 26 verklebt, wobei bei dieser Befestigung keine Wärmebelastungen auf den Meißelkörper 18 auftreten, die an diesem zu weiteren Eigenspannungen führen könnten. Die Dicke der Klebstoffschicht beträgt dabei ca. 0,5 mm.

Die Plättchen sind an ihren Oberseiten mit gefasten Kanten 16 versehen, wodurch sie gegen entsprechenden Kantenbruch gesichert sind. Diese Fasen haben dabei entweder eine rundliche Form 28, wie in der Figur 8 dargestellt, oder aber einen Neigungswinkel 29 von ca. 30°, wie er in der Figur 9 dargestellt ist. Diese Ausführungsformen haben sich für einen Kantenschutz bei den keramischen Plättchen als besonders vorteilhaft erwiesen.

Wie aus der Figur 6 zu ersehen ist, hat die Keilfläche 21 des Meißelkörpers 18 eine im wesentlichen trapezförmige Grundform, das heißt also die Seitenkanten 30 laufen von der Arbeitskante 17 in Richtung auf den Haltebolzen 19 aufeinander zu. Um dabei die sich über die gesamte Breite der Keilfläche erstreckenden Plättchenstreifen lokal an die Breite anzupassen, bestehen sie aus zwei Teilen, zwischen denen jeweils eine zur Breitenrichtung schräg verlaufende Fuge 31 verläuft. Über den schrägen Verlauf der Fuge 31 wird dabei sichergestellt, daß an dieser Fuge keine Längsauswaschungen der Plättchen auftreten.

Im in Figur 6 dargestellten Beispiel sind die Plättchenstreifen jeweils aus einem Standardteil (Typ 1) und einem an die lokale Breite der Keilfläche angepaßten Ergänzungsteil (Typen 2, 3 und 4) zusammengesetzt.

In den Figuren 10 und 11 ist eine alternative Ausführungsform eines Meißels dargestellt: Bei diesem sind allerdings runde keramische Plättchen 14 vorgesehen anstelle von über die gesamte Breite verlaufenden keramischen Plättchenstreifen wie in Figur 6 bzw. 7.

Auch diese runden keramischen Plättchen sind in entsprechenden Vertiefungen 15 eingeklebt, wobei auch im übrigen für gleiche Teile die gleichen Bezugsziffern gelten.

Insbesondere in der Aufsicht der Figur 10 kann man erkennen, daß jeweils mehrere Plättchen nebeneinander in Reihen angeordnet sind, wobei jede Reihe von Plättchen bezüglich der benachbarten Reihen von Plättchen auf Lücke angeordnet ist. Dadurch kann eine sehr enge Staffelung der einzelnen hintereinander angeordneten Reihen von runden keramischen Plättchen erreicht werden und damit ein entsprechend guter Verschleißschutz.

Auch die runden Plättchen sind mit entsprechend gefasten Kanten 16 versehen, um sie vor Kantenbruch zu bewahren. Auch hier lassen sich alternativ rundliche Formen verwenden oder aber ein Neigungswinkel von ca. 30°.

Zusammenfassend muß somit festgestellt werden, daß die Erfindung eine Möglichkeit gibt, Lockerungsschare erheblich verschleißfester zu gestalten.

## Patentansprüche

1. Schar (2) für ein Bodenbearbeitungsgerät (1) mit einer hartmetallgepanzerten vorderen Arbeitskante (8, 17), die in einen im wesentlichen keilförmigen Körper (11, 18) übergeht, der im Einsatz an Keilflächen (9, 21) von Bodenmaterial überstrichen wird,
dadurch gekennzeichnet,
daß die Keilflächen (9, 21) zumindest in Abschnitten mit keramischen Plättchen (12, 14, 23 - 26) versehen sind, die diese überwiegend abdecken.

2. Schar gemäß Anspruch 1,
dadurch gekennzeichnet,
daß die Plättchen (12, 14, 23 - 26) in korrespondierenden Vertiefungen (13, 15, 27) sitzen und nur teilweise über die Keilflächen (9, 21) überstehen.

3. Schar gemäß Anspruch 1,
dadurch gekennzeichnet,
daß die Plättchen (12, 14, 23 - 26) eingeklebt sind.

4. Schar gemäß Anspruch 1,
dadurch gekennzeichnet,
daß die Plättchen (12, 14, 23 - 26) gefaste Kanten (16, 28) aufweisen.

5. Schar gemäß Anspruch 4,
dadurch gekennzeichnet,
daß die Fase (16) abgerundet ist.

6. Schar gemäß Anspruch 4,
dadurch gekennzeichnet,
daß die Fase (16) einen Neigungswinkel (29) von ca. 30° aufweist.

7. Schar gemäß Anspruch 1,
dadurch gekennzeichnet,
daß die keramischen Plättchen (14) rund sind und in zueinander versetzten, hintereinander angeordneten Reihen gestaffelt sind.

8. Schar gemäß Anspruch 1, mit einem eine Keilfläche (21) aufweisenden Meißel (5),
dadurch gekennzeichnet,
daß sich die Plättchen (23 - 26) als Plättchenstreifen über die gesamte Breite der Keilfläche (21) erstrecken.

9. Schar gemäß Anspruch 8,
dadurch gekennzeichnet,
daß die Keilfläche (21) im wesentlichen trapezförmig ist und die Plättchenstreifen sich aus wenigstens einem Standardteil (23) und einem an die lokale Breite der trapezförmigen Keilfläche (21) angepaßten Ergänzungsteil (24 - 26) zusammensetzen.

10. Schar gemäß Anspruch 8,
dadurch gekennzeichnet,
daß die sich über die gesamte Breite erstreckenden Plättchenstreifen aus wenigstens zwei Teilen (23; 24 - 26) bestehen und die Fuge (31) zwischen zwei benachbarten Teilen schräg zur Breitenrichtung verläuft.

11. Schar gemäß Anspruch 1,
mit Scharflügeln (17), bei denen die hartmetallgepanzerten vorderen Arbeitskanten Schneiden (8) sind,
dadurch gekennzeichnet,
daß die mit keramischen Plättchen (12, 14) abgedeckten Abschnitte der Keilflächen (9) an dem der Schneide (8) abgewandten Ende angeordnet sind.
